(19) Europäisches Patentamt
European Patent Office
Office européen des brevets

(11) EP 0 618 945 B1

(12) **EUROPEAN PATENT SPECIFICATION**

(45) Date of publication and mention of the grant of the patent: **30.07.1997 Bulletin 1997/31**

(21) Application number: **93923818.4**

(22) Date of filing: **07.10.1993**

(51) Int Cl.6: **C08L 79/08**, C08L 67/03, C08L 69/00, C08K 5/5313, C08K 5/42, C08K 3/22 // (C08L79/08, 79:08, 69:00), (C08L79/08, 79:08, 67:03), (C08L69/00, 79:08, 79:08), (C08L67/03, 79:08, 79:08)

(86) International application number: **PCT/US93/09643**

(87) International publication number: **WO 94/10245 (11.05.1994 Gazette 1994/11)**

(54) **FIRE RETARDING THERMOFORMABLE BLENDS OF COPOLYMER RESINS**

FLAMMENHEMMENDE THERMOVERFORMBARE MISCHUNGEN AUS COPOLYMERE HARZE

MELANGES THERMOFORMABLES IGNIFUGES DE RESINES COPOLYMERES

(84) Designated Contracting States: **DE ES FR GB IT NL**

(30) Priority: **23.10.1992 US 965465**
**15.09.1993 US 121408**

(43) Date of publication of application: **12.10.1994 Bulletin 1994/41**

(73) Proprietor: **GENERAL ELECTRIC COMPANY Schenectady, NY 12345 (US)**

(72) Inventors:
- **SYBERT, Paul, Dean Evansville, IN 47712 (US)**
- **GLASER, Raymond, Hans Mount Vernon, IN 47620 (US)**

(74) Representative: **Szary, Anne Catherine, Dr. et al London Patent Operation, GE International, Inc., Essex House, 12-13 Essex Street London WC2R 3AA (GB)**

(56) References cited:
**EP-A- 0 103 123**
**EP-A- 0 325 719**
**EP-A- 0 349 720**
**EP-A- 0 519 657**
**NL-A- 8 105 889**
**US-A- 4 908 418**
**US-A- 5 051 483**

EP 0 618 945 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### BACKGROUND OF THE INVENTION

### Field of The Invention

The invention relates to thermoplastic molding compositions and more particularly to thermoformable compositions which are blends of polycarbonate and polyimide resins.

### Brief Description of the Related Art

Many applications, especially those in the transportation field, require that engineering thermoplastics be flame retardant. Polyetherimides, polycarbonates, siloxane polyetherimide copolymers, organopolysiloxane-polycarbonate copolymers and combinations thereof have been used as base resins for molding aircraft and automobile components as well as for insulation for wiring. In addition to possessing advantageous physical and chemical properties, they exhibit good flame retardant properties. See, for example, U.S. Patents 4,673,708, 4,629,759, 4,548,997, 4,468,506, 4,387,193, 4,390,665, 4,268,429 and 3,334,154.

The engineering thermoplastics that are in current use vary in their flue retardant properties, durability and thermoformability. Many do not meet the current standards for the flame resistance of construction materials used for the interior of transport category aircraft. Such standards are embodied in the 1986 amendments to Part 25 - Airworthiness Standards - Transport Category Airplanes of Title 14, U. S. Code of Federal Regulations. (See, 51 Federal Register 26206, July 21, 1986 and 51 Federal Register 28322, August 7, 1986). The flammability standards are based on heat calorimetry tests developed at Ohio State University. Such tests are described in the above-cited amendments to 14 C.F.R. Part 25. Other engineering thermoplastics that do meet the above-identified standards cannot be thermoformed in all circumstances, for example, in the construction of certain laminate panels, when the temperature range required for thermoforming exceeds the range for polymeric resin degradation.

In EP-A-0 519 657 ternary blends of a polyetherimide, a siloxane polyetherimide copolymer and a polycarbonate or co-polyester carbonate are described as thermoplastically moldable to fabricate articles possessing the physical and chemical resistance properties important for applications as aircraft cabin interior components, automobile parts, insulation for wiring and the like. In particular, this ternary blend results in an unexpected improvement in flame resisting performance and ductility. Further, certain ternary blends described meet or exceed the rigorous flammability standards that have been established for aircraft interior components. However, the exemplified blends (which do not include copolyester-carbonate containing ingredients) are generally not thermoformable for lamination with films of other polymeric resins such as films of polyvinylidene fluoride (PVF). The latter laminations require thermoformability of the substrate at temperatures below about 200°C. to avoid damage to the PVF film. In fact, the blends described in the copending application require a minimum of 60 percent by weight of the polyetherimide component, which obviates thermoformability of this blend.

Clearly, a need continues to exist for engineering thermoplastics that have improved flame retardant properties, durability and thermoformability. Thermoformable synthetic polymer compositions exhibiting a balance of ductility, solvent resistance and fire retardance are particularly in need for the aircraft industry. In certain applications, the use of PVF coated resin substrates are highly desirable. Such substrates must be capable of extrusion into sheets, coating with the PVF and thermoforming at low temperature to avoid degradation or discoloration of the PVF coating.

The resin blends of the present invention have been selected to meet the above-described industry need. Further advantages found in the blends of the invention will be described more fully hereinafter.

### SUMMARY OF THE INVENTION

The invention comprises, a thermoformable molding composition, which comprises; a blend of

(a) an aromatic, thermoplastic polycarbonate resin selected from the group consisting of a polycarbonate resin, a polyester-carbonate resin and a polyarylate resin;
(b) a polyetherimide resin having repeating chain units of the formula:-

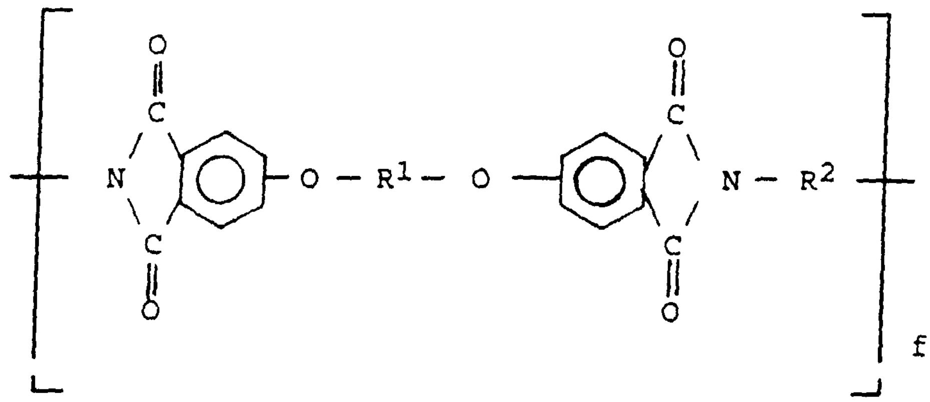

(I)

wherein f is an integer of from 10 to 500; $R^2$ represents a divalent aliphatic hydrocarbon radical containing from 2 to 12 carbon atoms, a divalent aromatic hydrocarbon of 6 to 30 carbon atoms, a halogenated hydrocarbon radical containing from 6 to 18 carbon atoms, or a divalent cyclo-aliphatic hydrocarbon radical containing from 3 to 10 carbon atoms; and $R^1$ is a divalent aromatic organic radical having from 6 to 30 carbon atoms, inclusive; and (c) a silicone-polyetherimide copolymer containing recurring or repeating chain units of the formula (I) given above, interrupted by polysiloxane units of the formula:

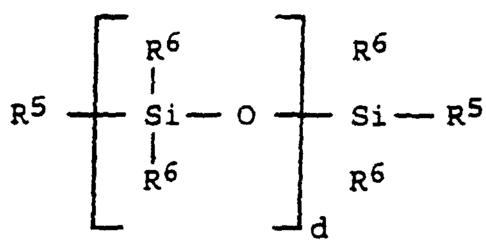

(II)

wherein each $R^5$ represents a divalent hydrocarbon radical having 1 to 14 carbon atoms; each $R^6$ is independently selected from monovalent hydrocarbon radicals having 1 to 14 carbon atoms; and d is an integer of from 4 to 40;

the relative proportions (by weight) of the ingredients (a), (b) and (c) being from 63 to 89 parts by weight of (a), from 0.4 to 4.6 parts by weight of (c) and the balance (b), based on the total of 100 parts by weight of (a), (b) and (c).

In the formula (I) given above, radicals included by $R^1$ are aromatic hydrocarbon radicals and halogenated aromatic hydrdcarbon radicals, for example, phenylene, tolylene, chlorophenylene, naphthalene, and radicals included by the formula:-

$$-- R^3 -- (G)_g -- R^3 --$$

wherein $R^3$ is a divalent aromatic radical having from 6-13 carbon atoms, inclusive, selected from hydrocarbon radicals and halogenated hydrocarbon radicals, g is an integer of 0 or 1; and G is a divalent radical selected from those of the formulae:-

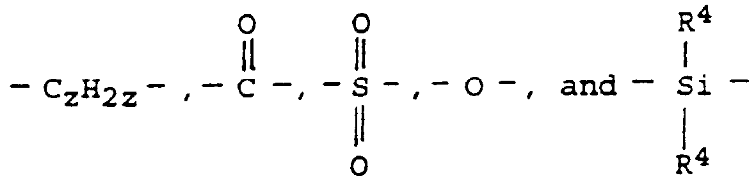 ;

wherein z is an integer having a value of from 1-5 inclusive, and $R^4$ is a monovalent alkyl, aryl, alkaryl or aralkyl radical, perferably methyl or phenyl.

The term "blend as used herein means a physical mixture or alloy of the prescribed polymeric components.

The compositions of the invention are useful to thermoplastically mold articles such as structural panels and the like.

BRIEF DESCRIPTION OF THE DRAWING

Figure 1 of the accompanying drawing illustrates a phase diagram for blends of a polyetherimide, a siloxane polyetherimide copolymer and a polycarbonate or a polyester-carbonate, wherein the relative proportions of the components are expressed as weight percentages. The shaded area of the graph represents certain preferred blends of the present invention. Figure 2 provides greater detail with a finer scale for the lower right hand portion of the diagram.

DETAILED DESCRIPTION OF THE PREFERRED EMBODIMENTS OF THE INVENTION

Aromatic polycarbonate resins which are thermoplastically moldable are well known, as are methods of their preparation. A common method of preparation is by the interfacial polymerization technique; see for example the details provided in the U.S. Patents 3,028,365; 3,334,154; 3,275,601; 3,915,926; 3,030,331; 3,169,121; 3,027,814; and 4,188,314.

In general, the method of interfacial polymerization comprises the reaction of a dihydric phenol with a carbonyl halide (the carbonate precursor).

Although the reaction conditions of the preparative processes may vary, several of the preferred processes typically involve dissolving or dispersing the diphenol reactants in aqueous caustic, adding the resulting mixture to a suitable water immiscible solvent medium and contacting the reactants with the carbonate precursor, such as phosgene, in the presence of a suitable catalyst and under controlled pH conditions. The most commonly used water immiscible solvents include methylene chloride, 1,2-dichloroethane, chlorobenzene, toluene, and the like.

The catalyst employed accelerates the rate of polymerization of the dihydric phenol reactant with the carbonate precursor. Representative catalysts include but are not limited to tertiary amines such as triethylamine, quaternary phosphonium compounds, quaternary ammonium compounds, and the like. The preferred process for preparing polycarbonate resins used as components of the blends the invention comprises a phosgenation reaction. The temperature at which the phosgenation reaction proceeds may vary from below 0°C, to above 100°C. The phosgenation reaction preferably proceeds at temperatures of from room temperature (25°C) to 50°C. Since the reaction is exothermic, the rate of phosgene addition may be used to control the reaction temperature. The amount of phosgene required will generally depend upon the amount of the dihydric phenol and the amount of any dicarboxylic acid also present.

The dihydric phenols employed are known, and the reactive groups are the two phenolic hydroxyl groups. Some of the dihydric phenols are represented by the general formula:

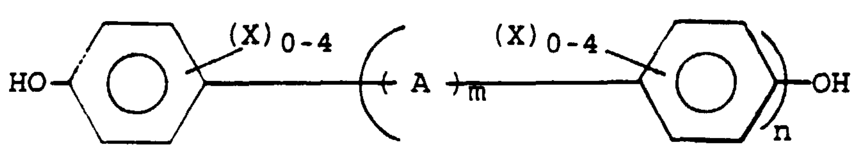

(III)

wherein A is a divalent hydrocarbon radical containing from 1 to about 15 carbon atoms; a substituted divalent hydrocarbon radical containing from 1 to about 15 carbon atoms and substituent groups such as halogen;

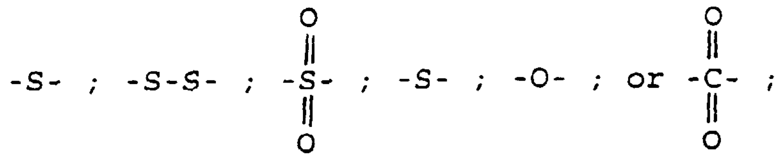

each X is independently selected from the group consisting of hydrogen, halogen, and a monovalent hydrocarbon radical such as an alkyl group of from 1 to 8 carbon atoms, an aryl group of from 6-18 carbon atoms, an aralkyl group of from 7 to 14 carbon atoms, an alkaryl group of from 7 to 14 carbon atoms, an alkoxy group of from 1 to 8 carbon atoms, or an aryloxy group of from 6 to 18 carbon atoms; and wherein m is zero or 1 and n is an integer of from 0 to 5.

Typical of some of the dihydric phenols that can be employed in the practice of the present invention are bisphenols such as (4-hydroxyphenyl)methane, 2,2-bis(4-hydroxyphenyl)propane (also known as bisphenol-A), 2,2-bis (4-hydroxy-3,5-dibromophenyl)propane; dihydric phenol ethers such as bis(4-hydroxyphenyl) ether, bis(3,5-dichloro-4-hydroxyphenyl) ether; dihydroxybiphenyls such as p,p'-dihydroxybiphenyl, 3,3'-dichloro-4,4'-dihydroxybiphenyl; dihydroxyaryl sulfones such as bis(4-hydroxyphenyl) sulfone, bis (3,5-dimethyl-4-hydroxyphenyl) sulfone; dihydroxybenzenes such as resorcinol and hydroquinone; halo- and alkyl-substituted dihydroxybenzenes such as 1,4-dihydroxy-2,5-dichlorobenzene and 1,4-dihydroxy-3-methylbenzene; and dihydroxybiphenyl sulfides and sulfoxides such as bis (4-hydroxyphenyl) sulfide, bis(4-hydroxyphenyl) sulfoxide and bis(3,5-dibromo-4-hydroxyphenyl) sulfoxide. A variety of additional dihydric phenols are available and are disclosed in U.S. Pat. Nos. 2,999,835; 3,028,365 and 3,153, 008. It is, of course, possible to employ two or more different dihydric phenols or a combination of a dihydric phenol with glycol.

The carbonate precursor can be either a carbonyl halide, a diarylcarbonate or a bishaloformate. The carbonyl halides include carbonyl bromide, carbonyl chloride, and mixtures thereof. The bishaloformates include the bishaloformates of dihydric phenols such as bischloroformates of 2,2-bis(4-hydroxyphenyl) propane, 2,2-bis(4-hydroxy-3,5-dichlorophenyl)propane, hydroquinone, and the like, or bishaloformates of glycols such as bishaloformates of ethylene glycol, and the like. While all of the above carbonate precursors are useful, carbonyl chloride, also known as phosgene, is preferred.

Also included within the scope of the present invention is the use of the high molecular weight thermoplastic randomly branched polycarbonates. These randomly branched polycarbonates are prepared by coreacting a polyfunctional organic compound with the aforedescribed dihydric phenols and carbonate precursor. The polyfunctional organic compounds useful in making the branched polycarbonates are set forth in U.S. Pat. Nos. 3,635,895 and 4,001,184. These polyfunctional compounds are generally aromatic and contain at least three functional groups which are carboxyl, carboxylic anhydrides, phenols, haloformyls or mixtures thereof. Some nonlimiting examples of these polyfunctional aromatic compounds include 1,1,1-tri(4-hydroxyphenyl) ethane, trimellitic anhydride, trimellitic acid, trimellityl trichloride, 4-chloroformyl phthalic anhydride, pyromellitic acid, pyromellitic dianhydride, mellitic acid, mellitic anhydride, trimesic acid, benzophenonetetracarboxylic acid, benzophenonetetracarboxylic anhydride, and the like. The preferred polyfunctional aromatic compounds are 1,1,1-tri(4-hydroxyphenyl)ethane, trimellitic anhydride or trimellitic acid or their haloformyl derivatives. Also included herein are blends of a linear polycarbonate and a branched polycarbonate.

The term "aromatic polycarbonate" as used herein is inclusive of copolyester-polycarbonates (also commonly referred to at times as polyester-carbonates or "PPC"), i.e., resins which contain, in addition to recurring polycarbonate chain units of the formula:

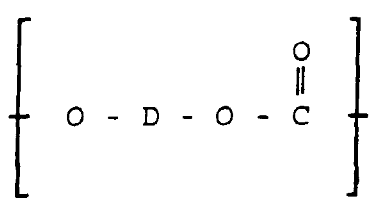

(IV)

wherein D is a divalent aromatic radical of the dihydric phenol employed in the polymerization reaction, repeating or recurring carboxylate units, for example of the formula:

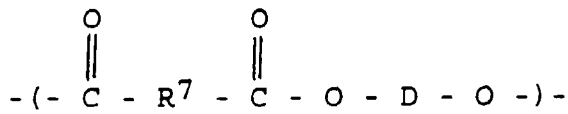

wherein D is as defined above and $R^7$ is an aromatic radical such as phenylene, naphthylene, bisphenylene, substituted phenylene and the like.

The copolyester-polycarbonate resins are also prepared by interfacial polymerization technique, well known to those skilled in the art; see for example the U.S. patents 3,169,121 and 4,487,896.

In general the copolyester-polycarbonate resins are prepared as described above for the preparation of polycarbonate homopolymers, but by the added presence of a dicarboxylic acid (ester precursor) in the water immiscible solvent.

Preferred polycarbonates employed in the present invention are polyester-carbonate (PPC) resins containing recurring polycarbonate chain units of the formula (IV) given above and repeating or recurring carboxylic chain units of the formula:-

$$\left[ R^8 - O - D - O \right] \qquad (V)$$

wherein D has the meaning previously ascribed to it and $R^8$ is a divalent moiety selected from those of the formulae:

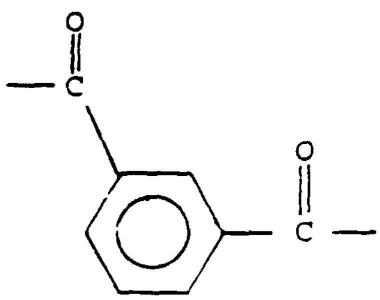

(VI)

or

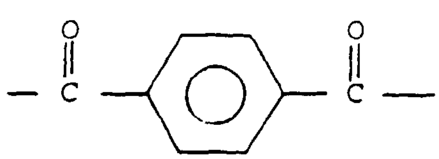

(VII).

These preferred polyester-carbonate resins are prepared employing as the ester precursor an aromatic dicarboxylic acid, and in particular mixtures of terephthalic acid with isophthalic acid wherein the weight percentage of isophthalic acid to terephthalic acid is in the range of from 100:0 to 0:100. Preferably the weight percentage is within the range of from 25:75 to 75:25.

Rather than utilizing. the dicarboxylic acid per se, it is possible, and sometimes even preferred, to employ the reactive derivatives of said acid. Illustrative of these reactive derivatives are the acid halides. The preferred acid halides are the acid dichlorides and the acid dibromides. Thus, for example instead of using terephthalic acid or mixtures thereof with isophthalic acid, it is possible to employ terephthaloyl dichloride, and mixtures thereof with isophthaloyl dichloride.

In the conventional interfacial polymerization methods of preparing polycarbonates polyester-carbonate and polyarylates, a molecular weight regulator (a chain stopper) is generally added to the reaction mixture prior to or during the contacting with a carbonate and/or ester precursors. Useful molecular weight regulators include, but are not limited to, monohydric phenols such as phenol, chroman-I, paratertiarybutylphenol, p-cumylphenol and the like. Techniques for the control of molecular weight are well known in the art and are used for controlling the molecular weight of the resins used in blends of the present invention.

The proportions of reactants employed to prepare the most preferred polyester-carbonate resins may vary within a limited range. In general, the weight percentage content of the ester units of the formulae VI and VII together may be from 40 to 80 percent.

The preferred polyester-carbonates for use in the present invention are those derived from bisphenol-A and phosgene and having an intrinsic viscosity of 0.5 to 0.65 deciliters per gram measured in methylene chloride at a temperature of 25°C.

Polyarylates are well known resins consisting of repeating carboxylic chain units as shown in the formula (V) given above. The polyarylate polymers, in general, are prepared by reacting an aromatic difunctional carboxylic acid or ester forming derivative thereof, and a dihydric phenol. Of course, polyarylates may be polymerized from a carboxylic acid/hydroxy functional monomer in a head-tail arrangement. The aromatic dicarboxylic acids and dihydric phenols described above for preparation of polyester-carbonates may be used in the preparation of polyarylate resins.

In a preferred polyarylate the difunctional carboxylic acid residue portion contains residues of mixtures of terephthalic acid and isophthalic acid. More preferably, such polyarylates contain residues of a mixture of from 30 to 70 mole percent terephthalic acid and from 70 to 30 mole percent of isophthalic acid. A polyarylate containing residues of a mixture of 50 mole percent of terephthalic acid and 50 mole percent isophthalic acid is common. In general, these and other suitable polyarylates have a reduced viscosity of from 0.4 to 1.0 g/100 ml as measured in p-chlorophenol at 49°C. The polyarylates employed in the present invention can be prepared by any of the well known prior art polyester forming reactions, such as the reaction of the acid chlorides of the aromatic dicarboxylic acids with the dihydric phenol, the reaction of the diaryl esters of the aromatic dicarboxylic acids with the dihydric phenols, and the reaction of the aromatic diacids with diester derivatives of dihydric phenol. These processes are described in, for example, U.S. Pat. Nos. 3,317,464; 3,948,856; 3,780,148; 3,824,213; 3,133,898; and 4,477,647.

The polyimide resins comprising the ingredient (b) in the blends of the invention are also known compounds whose preparation and properties are well known to those skilled in the art. For the purposes of the instant invention the polyetherimides are the preferred polyimides. The preferred polyetherimides are described in U.S. Patent Nos. 3,803,085 and 3,905,942. These polyetherimides are represented by the general formula (I) given above.

Illustrative of a particularly preferred polyetherimide falling within the scope of Formula (I) is one wherein $R^2$ is phenylene and $R^1$ is the divalent moiety of formula:-

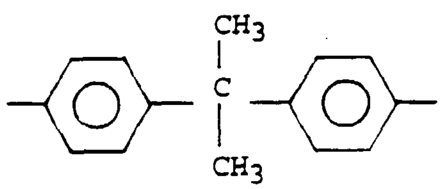

. (VIII)

In general, the polyetherimides of formula (I) given above may be prepared by the reaction of an aromatic bis(ether anhydride) of the formula:-

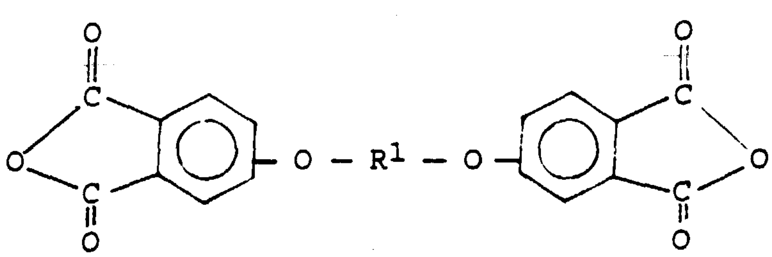

(IX)

wherein $R^1$ is as defined above, with an organic diamine of the formula:

$$H_2N\text{-}R^2\text{-}NH_2 \qquad (X)$$

where $R^2$ is as defined hereinbefore.

Aromatic bis(ether anhydride)s of the above formula (IX) include, for example, 2,2-bis[4-(2,3-dicarboxyphenoxy) phenyl]propane dianhydride; 4,4'-bis(2,3-dicarboxyphenoxy)diphenyl ether dian-hydride; 1,3-bis(2,3-dicarboxyphenoxy)benzene dianhydride; 4,4'-bis(2,3-dicarboxyphenoxy)diphenyl sulfide dianhydride; 1,4-bis(2,3-dicarboxy-phenoxy)benzene dianhydride; 4,4'-bis(2,3-dicarboxyphenoxy)benzophenone dianhydride; 4,4'-bis(2,3-dicarboxyphenoxy)diphenyl sulfone dianhydride; 2,2-bis[4-(3,4-dicarboxyphenoxy)-phenyl]propane dianhydride; 4,4'-bis(3,4-dicarboxyphenoxy)diphenyl ether dianhydride; 4,4'-bis(3,4-dicarboxyphenoxy)-diphenyl sulfide dianhydride; 1,3-bis(3,4-dicarboxyphenoxy)benzene dianhydride; 1,4-bis(3,4-dicarboxyphenoxy)benzene dianhydride; 4,4'-bis(3,4-dicarboxyphenoxy)benzophenone dianhydride; 4-(2,3-dicarboxyphenoxy)-4'-(3,4 dicarboxy- phenoxy)diphenyl-2,2-propane dianhydride; and mixtures of such dianhydrides.

Organic diamines of the formula (X) include, for example, m-phenylenediamine, p-phenylene-diamine, 4,4'-diaminodiphenyl propane, 4,4'-diaminodiphenyl methane, benzidine, 4,4'-diaminodiphenyl sulfide, 4,4'-diaminodiphenyl sulfone, 4,4'-diaminodiphenyl ether, 1,5-diaminonaphthalene, 3,3'-dimethyl- benzidine, 3,3'-dimethoxybenzidine, 2,4-bis (β-amino-t-butyl) toluene, bis(p-β-amino-t-butyl- phenyl)ether, bis(p-β-methyl-o-aminophenyl)benzene, 1,3-diamino-4-isopropylbenzene, 1,2-bis(3-amino-propoxy)ethane, m-xylylenediamine, p-xylylene-diamine, 2,4-diamino-toluene, 2,6-diamino-toluene, bis(4-aminocyclo- hexyl)methane, 3,methylheptamethylenediamine, 4,4-dimethylheptamethylenediamine, 2,11-dodecanediamine, 2,2-dimethylpropylenediamine, octamethylenediamine, 3-methoxyhexamethylene- diamine, 2,5-dimethylhexamethylenediamine, 2,5-dimethylheptamethylene-diamine, 3-methyl- heptamethylenediamine, 5-methylnonamethylenediamine, 1,4-cyclohexane-diamine, 1,12-octadecanediamine, bis(3-amino-propyl) sulfide, N-methyl-bis(3-aminopropyl)amine, hexamethylene- diamine, heptamethylenediamine, nonamethylene- diamine, decamethylenediamine, bis(3-aminopropyl) tetramethyldisiloxane, bis(4-aminobutyl)tetramethyldisiloxane, and the like.

In general, the reactions can be advantage-ously carried out employing well-known solvents, e.g., o-dichlorobenzene, m-cresol/toluene and the like to effect interaction between the dianhydrides and the diamines, at temperatures of from 100° to 250°C. Alternatively, the polyether- imides can be prepared by melt polymerization of any of the aforementioned dianhydrides with any of the aforementioned diamine compounds while heating the mixture of the ingredients at elevated temper-atures with concurrent intermixing. Generally, melt polymerization temperatures between about 200° to 400°C. and preferably 230° to 300°C can be employed.

Any order of addition of chain stoppers (molecular weight regulators) ordinarily employed in melt polymerization can be used.

The conditions of the reaction and the proportions of ingredients can be varied widely depending on the desired molecular weight, intrinsic viscosity, and solvent resistance. In general, equimolar amounts of diamine and dian-hydride are employed for high molecular weight polyetherimides. However, in certain instances, a slight molar excess (about 1 to 5 mol percent) of diamine can be employed resulting in the production of polyetherimides having terminal amine groups. Generally, useful polyetherimides have an intrinsic viscosity [_] greater than 0.2 deciliters per gram, preferably 0.35 to 0.60, or 0.7 deciliters per gram or even higher when measured in m-cresol at 25°C.

Included among the many methods of making the polyetherimides are those disclosed in U.S. Patent Nos. 3,847,867; 3,847,869; 3,850,885; 3,852,242; and 3,855,178.

The silicone-polyetherimide employed in the preferred blends of the invention as the ingredient (c) are exemplified by resins containing recurring or repeating chain units of the formula (I) given above interrupted by polysiloxane units of the formula (II) given above.

The silicone-polyetherimide resins described above are generally well-known compounds, which may be prepared by a number of known methods; see for example the procedures described in U.S. Patents 4,690,997 and 4,808,686. In general, the method of preparation may be by reaction between amino-terminated polydiorgan siloxanes of the formula:

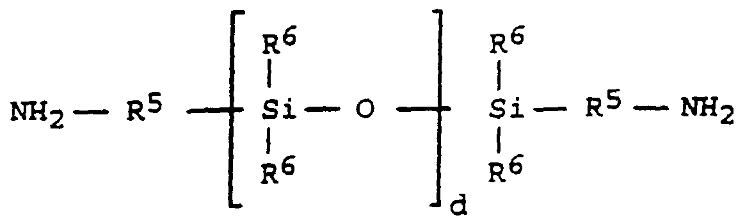

(XI)

wherein $R^5$, $R^6$ and d have the meanings previously ascribed to them; and
an organic diamine of the formula (X) given above;

with a substantially equal molar proportion of an aromatic bisanhydride of the formula (IX) given above.

The amine-terminated polydiorganosiloxanes (XI) are also well-known compounds which may be prepared by the procedures described in the U.S. Patent 3,185,719 (Prober).

The preferred silicone-polyetherimide resins for use in the present invention contain 20 to 60 weight percent of siloxane units of the formula (II) given above.

The relative proportions of the polymer blend ingredients (a), (b) and (c) described above are within a particular defined range, as illustrated in the accompanying drawing. The blends of the invention are represented substantially by the shaded area of the phase diagram shown in the drawing. This shaded area corresponds approx-imately to blends containing from 63 to 89 parts by weight of aromatic polycarbonate polyester-carbonate or polyarylate (a), 0.4 to 4.6 parts of the silicone-polyetherimide copolymer (c) and the balance of polyetherimide resin (b). The concentration of the polyetherimide resin (b) in the blends of the invention is at least 8.5 percent by weight of the three ingredients, and not more than 35 percent by weight.

The blend compositions of the invention may be modified by the addition of other additives conventionally used in the art of plastics compounding. Such additives can include fillers (such as clay or talc), suppiementary delustrants, reinforcing agents (such as glass fibers), impact modifiers, antistats, plasticizers, flow promoters and other processing aids, stabilizers, colorants, mold release agents, ultraviolet screening agents, drip inhibitors such as polytetrafluoroethylene (PTFE), supplementary or synergistic flame retardants, and the like provided the addition does not adversely affect desired properties in the articles molded from the blend.

Additional preferred embodiments of the invention include thermoplastic molding compositions containing mixtures of the above-described polyester-carbonates or polyarylates with minor proportions (less than about 40 percent by weight) of polycarbonate homopolymers.

Preferred blend compositions of the invention include a flame retarding proportion of a flame retarding additive compatible with the blend of the invention. Particularly preferred as a flame retarding additive is sodium benzenephosphinate (SBP) or sodium 2,4,5-trichlorobenzene-sulfonate (STB). The flame retarding proportion of these two particularly preferred fire retarding agents is generally within the range of from 50 to 500 PPM of the polyetherimide resin (b) ingredient.

Preferred compositions of the invention may also include a fire retardant enhancing proportion of titanium dioxide (generally within the range of from 0.1 to 3 parts by weight).

The production of the blend compositions of the invention is done by any of the blending operations known for the blending of thermo-plastics, for example blending in a kneading machine such as a Banbury mixer or an extruder. The sequence of addition (except in respect to inclusion of the flame retardants STB and SBP to be described hereinafter) is not critical but all components should be thoroughly blended together. Blending, including melt blending, can be done continuously or batchwise.

The invention will be better understood with reference to the following preparations and examples, which are presented for purposes of illustration rather than for limitation, and which set forth the best mode contemplated for carrying out the invention.

The term "iso/tere" is used herein to mean the ratio by weight of isophthalic moieties of the formula (VI) to terephthalic moieties of formula (VII) given above.

Where reported, the following test procedures were followed:

Heat and Smoke Release

Determined by the Ohio State University (OSU) rate-of-release apparatus and the U.S. National Bureau of Standards (USNBS) Smoke Chamber, which are in accordance with the procedures set forth in Part 25 of Title 14, U.S. Code of Federal Regulations as amended (51 Federal Register 26206 and 28322). The tests measure rates of heat release at the peak of release and at 2 minutes after ignition. To be acceptable under the test standard, the 2 minutes heat

release value must be below 65 $\frac{\text{kilowatts x minutes}}{M^2}$ and the peak heat release rate must be below 65 kilowatts/$M^2$.

Solvent Resistance

The chemical resistance testing was performed as follows :

Strain jigs were obtained with a 17.98 cm (7.08 in.) radius (0.875% strain). Izod bars (6.35 x 1.27 x 317.5 cm) (2.5 in. x 0.5 in. x 125 in.) were clamped in the strain jig. The samples were then soaked as follows with the appropriate solvents at the times indicated below: A two ply paper towel saturated (but not dripping) with the desired solvent was placed on the middle of the bar for 60 seconds. The paper towel was then removed. At the appropriate times the specimens were checked visually for cracks, crazing or dissolution of the resin. The samples were soaked and observed according to the following schedule (hours): 0 (soak/observe), 0.5 observe, 1.0 (soak/observe), 1.5 (observe), 2.0 (soak/observe), 2.5 (observe), 3.0 (soak/observe), 4.0 (soak/observe), 24.0 (observe). The results at the end of 24 hours are listed in Table VIII.

Notched Izod (NI)

Impact on molded samples was determined according to ASTM test method D-256.

Molecular Weight ($M_w$)

The weight average molecular weight ($M_w$) is determined by gel permeation chromatography (GPC) in methylene chloride relative to polycarbonate standards using a UV detector at 254 nm.

WEIGHT PERCENT ESTER CONTENT IN PPC RESINS

Weight percent ester content is calculated in the following manner wherein the dihydric phenol reactant is bisphenol A.

$$\text{Wt. \% ester} = \frac{(\text{mole \% ester})(358)}{(\text{mole \% ester})(358) + (\text{mole \% carbonate})(254)} \times 100$$

$$\text{Mole \% ester} = \frac{\text{moles of aromatic diacid}}{\text{moles of dihydric phenol}} \times 100$$

358 = molecular weight of the unit

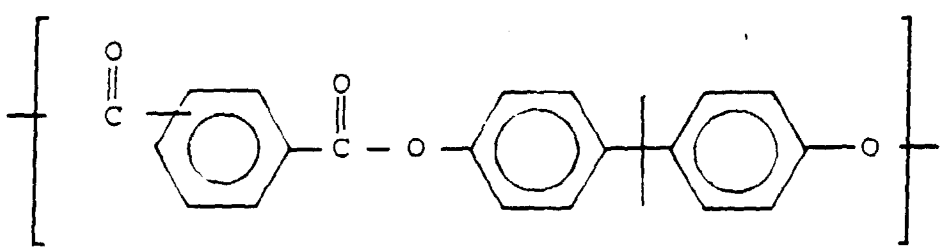

and 254 = molecular weight of the unit

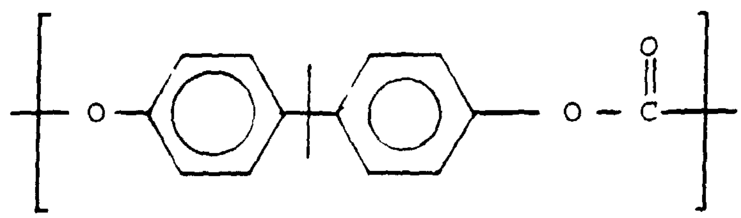

All parts are by weight unless otherwise stated.

Examples 1-11

In a series of runs, various proportions (parts by weight) of a bisphenol-A derived polyester-carbonate (PPC) resin characterized by having an 80 percent by weight content of ester units of the formulae (VI) and (VII) given above and an iso/tere weight ratio [units of formula (VI) : (VII)] of 93/7, were blended with varying parts by weight of an antioxidant (Irgafos® 168; Ciba-Geigy Corp.), a polyetherimide resin containing about 350 ppm of the fire-retardant compound sodium benzenephospinate (Ultem® 1000 grade, General Electric Company, Pittsfield, Massachusetts) and a siloxane-polyetherimide copolymer prepared by the polymerization of 1 equivalent of 2,2-bis [4-(3,4-dicarboxy-phenoxy) phenyl] propane dianhydride with 0.65 equivalents of meta-phenylenediamine and 0.35 equivalents of bis-gamma-aminopropyl polydimethyl siloxane, a polymer of the formula (II) given above wherein d is an average of 10; Siltem®, General Electric Co., Pittsfield, MA., U.S.A. Example 1 contains no Siltem® and is given as a control. The blend was then fed to an extruder at a temperature of about 340°C. to extrude the blend into strands. The strands were chopped into pellets and injection molded into test samples measuring 6.35 cm X 1.27 cm X 0.317 cm. The samples were tested for physical properties. The composition of each blend and the test results are set forth in the Table, I, below.

TABLE I

| EXAMPLES: | 1 (control) | 2 | 3 | 4 | 5 |
|---|---|---|---|---|---|
| Blend Formulation (parts by wgt.) | | | | | |
| PPC | 69.80 | 69.20 | 76.45 | 67.00 | 89.00 |
| Siltem® | 0.00 | 1.00 | 2.65 | 1.80 | 1.35 |
| Ultem® | 30.00 | 29.60 | 21.00 | 30.10 | 8.90 |
| Irgafos® 168 | 0.20 | 0.20 | 0.25 | 0.25 | 0.30 |
| Physical Properties: | | | | | |
| Notched Izod ($Kg/cm^2$) (125 mil) 3.175mm | 0.11 | 0.11 | 0.15 | 0.11 | 0.20 |
| Fire Retardance | | | | | |
| OSU | | | | | |
| 2 MIN. ($2kw/m^2$) | 54 | 15 | 12 | 19 | 15 |
| Peak ($kw/m^2$) | 78 | 49 | 58 | 61 | 62 |
| NBS Ds Max | 27 | 10 | | | |

TABLE I (Cont'd)

| EXAMPLE: | 6 | 7 | 8 | 9 | 10 | 11 |
|---|---|---|---|---|---|---|
| Blend Formulation (parts by wgt.) | | | | | | |
| PPC | 67.90 | 75.45 | 77.30 | 76.45 | 75.60 | 76.45 |
| Siltem® | 1.35 | 2.30 | 1.20 | 2.30 | 3.35 | 2.30 |
| Ultem® | 30.50 | 21.00 | 21.25 | 21.00 | 20.80 | 21.00 |
| Irgafos® 168 | 0.25 | 0.25 | 0.25 | 0.25 | 0.25 | 0.25 |
| Physical Properties: | | | | | | |
| Notched Izod ($kg/cm^2$) (125 mil) 3.175mm | 0.11 | 0.13 | 0.13 | 0.15 | 0.14 | 0.14 |
| Fire Retardance | | | | | | |
| OSU | | | | | | |
| 2 MIN. ($2kw/m^2$) | 13 | 16 | 9 | 7 | 13 | 9 |
| Peak ($kw/m^2$) | 57 | 60 | 57 | 54 | 60 | 60 |
| NBS Ds Max | | | | | | |

As can be observe from the Table I, blends of the invention meet the specification of the OSU flame retarding test

and are thermoformable. Example 1, which is not an example of the invention, does not meet the OSU specification for flame retarding.

Examples 12-19

The general procedure of Examples I-11, supra., was repeated, except that the polyester-carbonate (PPC) as used therein was replaced with a polyester-carbonate having a 60% by weight content of the ester units of formulae (VI) and (VII) in an iso/tere weight ratio of 50/50 and varying proportions of titanium oxide were added to the blend. The composition of each blend and the physical test results are set forth in the Table II below.

## TABLE II

| EXAMPLES: | 12* | 13 | 14 | 15 | 16 | 17 | 18 | 19 |
|---|---|---|---|---|---|---|---|---|
| Blend Formulation (parts by wgt.) | | | | | | | | |
| PPC | 92.10 | 75.80 | 73.90 | 63.20 | 73.9 | 66.7 | 73.9 | 85.6 |
| Siltem® | 2.80 | 1.20 | 2.50 | 2.00 | 2.5 | 1.3 | 2.5 | 3.4 |
| Ultem® | 2.50 | 20.80 | 21.50 | 33.00 | 21.5 | 30 | 21.5 | 8.6 |
| $TiO_2$ | 2.50 | 2.10 | 2.00 | 1.70 | 2.00 | 1.90 | 2.00 | 2.30 |
| Irgafos® 168 | 0.10 | 0.10 | 0.10 | 0.10 | 0.10 | 0.10 | 0.10 | 0.10 |
| Physical Properties: | | | | | | | | |
| Notched Izod ($kg/cm^2$) (125 mil) 3.175mm | 0.63 | 0.39 | 0.41 | 0.15 | 0.28 | 0.19 | 0.40 | 0.61 |
| Fire Retardance | | | | | | | | |
| OSU | | | | | | | | |
| 2 MIN. ($2kw/m^2$) | 41 | 12 | 21 | 26 | 13 | 11 | 15 | 13 |
| PEAK ($kw/m^2$) | 49 | 54 | 56 | 62 | 51 | 52 | 59 | 61 |
| NBS Ds Max | 26 | 19 | 17 | 22 | | | 16 | 22 |

* Comparative

Examples 20-22

The general procedure of Examples 1-19, supra., was repeated, except that the polyester-carbonate (PPC) as used therein was replaced with a polyester-carbonate having varying ester unit contents of 40 to 80 percent by weight of the units of the formulae (VI) and (VII) and varying iso/tere weight ratios. The proportions of blend ingredients are as given below.

TABLE III

| | Parts by Wgt. |
|---|---|
| PPC | 74.0 |
| Ultem®, supra. | 21.5 |
| Siltem®, supra. | 2.4 |
| $TiO_2$ | 2.0 |
| Irgafos®, 168, supra. | 0.1 |

The PPC resin used and the physical properties observed upon testing are set forth in the Table IV below.

TABLE IV

| Examples | 20 | 21 | 22 |
|---|---|---|---|
| PPC | | | |
| % Ester<br>Iso/Tere Ratio | 40<br>93/7 | 80<br>93/7 | 70<br>50/50 |
| PHYSICAL PROPERTIES: | | | |
| NOTCHED IZOD ($kg/cm^2$) (125 mil) 3.175 mm<br>Fire Retardance | 0.23 | 0.19 | 0.46 |
| OSU | | | |
| 2 Min. ($2kw/m^2$)<br>Peak ($kw/m^2$) | 15.00<br>62.00 | 22.00<br>58.00 | 12.00<br>63.00 |

Table IV shows that the best OSU (peak heat release rates) results are obtained with PPCs containing 80% ester. Notice, however, the ductility of the blend is strongly influenced by the ratio of iso- to terephthalate groups making up the ester in the PPC. thus, the most preferred PPC containing blend compositions contain 60 to 80% by weight ester and an iso/tere ratio of 25/75 to 75/25.

The blends of the invention shown in the Examples given above have softening points within temperature ranges below about 200°C. As such, these blends are extrudable in sheet configurations which can be laminated with layers, for example, of polyvinylidene fluoride (a decorative laminate). The laminate may then be thermoformed, using conventional techniques, into aircraft interior components such as wall panels, without melting or discoloring the polyvinylidene fluoride layer.

Examples 23-28

A series of blends were prepared by mixing 74 parts by weight of a polyester-carbonate resin containing 80 percent by weight of the ester moieties of formula (VI) and (VII) in an iso/tere weight ratio of 93/7, or 60 percent by weight of the.ester moieties of formula (VI) and (VII) in an iso/tere weight ratio of 50/50, with 2.4 parts by weight of the siloxane-polyetherimide copolymer resin Siltem®, supra., 2.0 parts by weight of titanium dioxide, 0.1 parts by weight of the antioxidant Irgafos® 168, supra., and 21.5 parts by weight of a polyetherimide (Ultem®, supra.). Various proportions of sodium benzenephosphinate were also added to the blend through inclusion in the Ultem® resin, either during the polymerization process or post polymerization. The blend compositions and OSU test results are given in the Table V below.

TABLE V

Effect Of the Addition Of SBP to Blend

| EXAMPLES: | 23 | 24 | 25 | 26 | 27 | 28 |
|---|---|---|---|---|---|---|
| Blend Formulation: (parts by weight) | | | | | | |
| PPC (a) | 74.00 | 0.00 | 0.00 | 0.00 | 0.00 | 0.00 |
| PPC (b) | 0.00 | 74.00 | 74.00 | 74.00 | 74.00 | 74.00 |
| SBP in Ultem® Resin | 0.00 | 350(d.) | 350(d.) | 350 (d.) | 0.00 | 500 (c) |
| Fire Retardance | | | | | | |
| OSU | | | | | | |
| 2 MIN. ($2kw/m^2$) | 25.00 | 12.00 | 12.00 | 5.00 | 6.00 | 13.00 |
| Peak ($kw/m^2$) | 57.00 | 50.00 | 50.00 | 44.00 | 58.00 | 54.00 |

a. PPC = 93/7 iso/tere ratio, 80 wgt. % ester

b. PPC = 50/50 iso/tere ratio, 60 wgt. % ester

c. Added to ULTEM Resin Via Extrusion (concentration of SBP given in ppm relative to ULTEM®).

d. Added to ULTEM During Polymerization Process (concentration of SBP given in ppm relative to ULTEM®).

Examples 29-32

The general procedure of Examples 23-28. supra., was repeated, except that the polyester-carbonate resin as used therein was replaced with a polyester-carbonate resin containing 60 weight percent of the ester unit moieties of formulae (VI) and (VII) in an iso/tere weight ratio of 50/50 and the fire retardant additive was replaced with sodium 2,4,5-trichlorobenzenesulfonate. The test results are also shown in Table VI, below.

TABLE VI

| Examples | 29 | 30 | 31 | 32 |
|---|---|---|---|---|
| Blend Formulation | | | | |
| PPC (a) | 74.00 | 73.92 | 73.70 | 73.41 |
| Siltem®, supra. | 2.40 | 2.40 | 2.39 | 2.38 |
| $TiO_2$ | 2.00 | 2.00 | 2.00 | 1.98 |
| Irgafos®, 168 | 0.10 | 0.10 | 0.10 | 0.10 |
| Ultem®, supra. | 21.50 | 21.48 | 21.41 | 21.33 |
| STB (c) | 0.00 | 0.10 | 0.40 | 0.80 |
| Fire Retardance OSU | | | | |
| 2 Min. (2 $Kw/m^2$) | 17.00 | 15.00 | 21.00 | 26.00 |
| Peak ($Kw/m^2$) | 63.00 | 56.00 | 61.00 | 61.00 |

(a) PPC = 50/50 Iso/Tere Ratio, 60 wt % Ester

(c) STB = sodium 2,4,5-trichlorobenzenesulfonate

From the Table V it is observed that low levels of sodium benzenephosphinate (SBP) added to the polyetherimide resin, improves the OSU performance of the blend. Example 28 shows that when SBP (500 ppm in Ultem®) is compounded into the Ultem® prior to the addition of the PPC, a significant increase in the OSU performance was noted

over Example 27. Note that sodium 2,4,5-trichlorobenzenesulfonate (STB) shows similar behavior (Table VI), Example 30 compared to Example 39.

Examples 33-46

A series of blends were prepared following the general procedure of Examples 1-19, supra., but various proportions of the polyester-carbonate used therein were replaced with a polycarbonate homopolymer and/or a polyarylate. The blend compositions and the test results are set forth in the Table VII, below.

TABLE VII

| Examples | 33 | 34 | 35 | 36 | 37 |
|---|---|---|---|---|---|
| Blend Formulation (Parts by Wgt.) | | | | | |
| PPC (a) | | 74.00 | 55.50 | 37.00 | |
| Lexan®, 130 (b) | | | 18.50 | 37.00 | 75.00 |
| Siltem®, supra. | 2.40 | 2.40 | 2.40 | 2.40 | 2.20 |
| $TiO_2$ | 2.00 | 2.00 | 2.00 | 2.00 | 2.00 |
| Irgafos®, 168 | 0.10 | 0.10 | 0.10 | 0.10 | 0.20 |
| Ultem® (d) | 21.50 | 21.50 | 21.50 | 21.50 | 20.70 |
| Ardel®, D170 (c) | 74.00 | | | | |
| Wgt.% Ester in Blend | 100.00 | 80.00 | 60.00 | 40.00 | 0.00 |
| Fire Retardance OSU | | | | | |
| 2 Min. (2 $Kw/m^2$) | 10.00 | 22.00 | 15.00 | 15.00 | 18.00 |
| Peak ($Kw/m^2$) | 54.00 | 58.00 | 59.00 | 61.00 | 66.00 |

(a) PPC = 93:7 Iso/Tere Ratio, 60 wt % Ester

(b) A polycarbonate homopolymer prepared by phosgenation of bisphenol-A, $M_w$ of 36,300; General Electric Co., Mt. Vernon, Indiana.

(c) Polyarylate (100% ester, iso/tere weight ratio = 50/50). The product of reacting bisphenol-A with terephthalic and isophthalic acids, $M_w$ 25,500; Amoco Chemical Corp., Chicago, Illinois.

Polycarbonate, polyestercarbonate and polyarylates form miscible blends. Table VII indicates that polycarbonates, polyester-carbonates and/or polyarylates can be blended together for use in these blends. The performance of the blend is related to the average ester content and average iso/tere content in the poly(estercarbonate) phase.

Those skilled in the art will appreciate that the blends of the invention preferably include polymer chain moieties of the

formulae (VI) and (VII) together comprising from 40 to 80 weight percent (preferably 60 to 80 weight percent) of the polyester-carbonate or 100 percent of the polyarylate, the weight ratio of units of the formula (VI) to units of the formula (VII) being within the range of 7:93 to 75/25, preferably 25:75 to 75:25.

The Example 37 given above illustrates that even without ingredients having the units of formulae VI and VII, the blends are marginally fire retardant and useful for some application.

Example 38

A series of blends were prepared by homogeneous mixture of various polyester-carbonate resins (74.0 parts by weight) with 21.5 parts by weight of the polyetherimide resin (Ulten®, supra.) 2.4 parts by weight of the siloxanepolyetherimide copolymer resin (Siltem®, supra.) and 2.0 parts by weight of titanium dioxide. The blends were thermally processed as described in Examples 1-19, supra. and the test samples obtained were tested for solvent resistance in a variety of industrial solvents. the polyester-carbonates employed, the solvents tested against and the results are given in the Table VIII, below.

## TABLE VIII

| | 80% By Weight Ester Units | | 40% By Weight Ester Units | | |
|---|---|---|---|---|---|
| Iso/Tere Ratio | 93/7 | 50/50 | 93/7 | 50/50 | 0/100 |
| Solvents | | | | | |
| Toluene (neat) | crazed | failed | passed | passed | crazed |
| 50/50 (a) | crazed | failed | failed | crazed | failed |
| Methylethylketone (MEK) (neat) | failed | failed | | | |
| 50/50 (b) | passed | passed | passed | passed | passed |
| Trichloroethylene (TCE) 50/50 (c) | passed | passed | passed | passed | passed |

a. Toluene/isopropanol 50/50 (v/v)
b. MEK/isopropanol 50/50 (v/v)
c. TCE/isopropanol 50/50 (v/v)

## Claims

1. A thermoformable molding composition, which comprises; a blend of

(a) an aromatic, thermoplastic resin selected from the group consisting of a polycarbonate resin, a polyester carbonate resin and a polyarylate resin;

(b) a polyetherimide resin having repeating chain units of the formula:

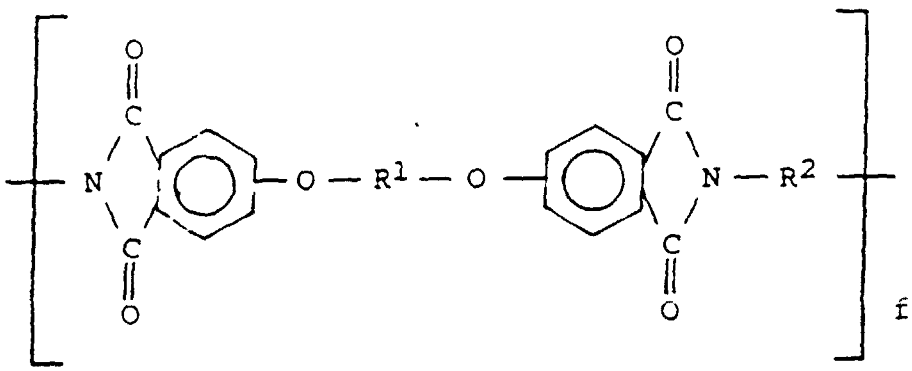

(I)

wherein f is an integer of from 10 to 500; $R^2$ represents a divalent aliphatic hydrocarbon radical containing from 2 to 12 carbon atoms, a divalent aromatic hydrocarbon of 6 to 30 carbon atoms, a halogenated hydrocarbon radical containing from 6 to 18 carbon atoms, or a divalent cyclo-aliphatic hydrocarbon radical containing from 3 to 10 carbon atoms; and $R^1$ is a divalent aromatic organic radical having from 6 to 30 carbon atoms; and

(c) a silicone-polyetherimide copolymer containing recurring or repeating chain units of the formula (I) given above, interrupted by polysiloxane units of the formula:-

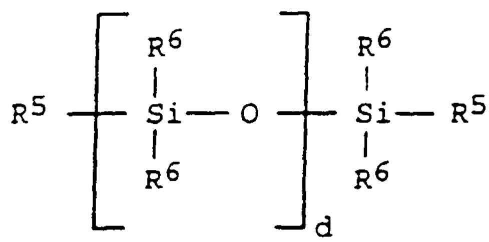

(II)

wherein each $R^5$ represents a divalent hydrocarbon radical having 1 to 14 carbon atoms; each $R^6$ is independently selected from monovalent hydrocarbon radicals having 1 to 14 carbon atoms; and d is an integer of from 4 to 40;

the relative proportions by weight of the ingredients (a), (b) and (c) being from 63 to 89 parts by weight of (a), from 0.4 to 4.6 parts by weight of (c) and the balance (b), based on the total of 100 parts by weight of (a), (b) and (c).

**2.** The composition of claim 1 wherein $R^1$ is selected from the group consisting of aromatic hydrocarbon radicals; halogenated aromatic hydrocarbon radicals; and radicals included by the formula:-

$$-R^3-(G)_g-R^3-$$

wherein $R^3$ is a divalent aromatic radical having from 6-13 carbon atoms selected from hydrocarbon radicals and halogenated hydrocarbon radicals, g is 0 or 1 and G is a divalent radical selected from those of the formula:-

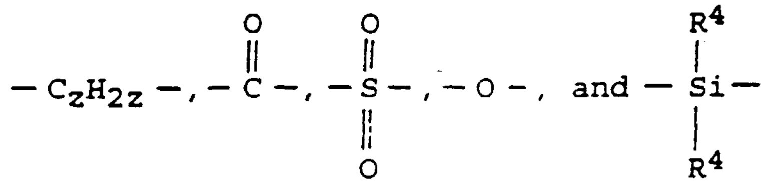 ;

wherein z is an integer having a value of from 1-5, and $R^4$ is a monovalent alkyl, aryl, alkaryl or aralkyl radical.

**3.** The composition of claim 2 wherein $R^1$ is a divalent moiety of the formula:

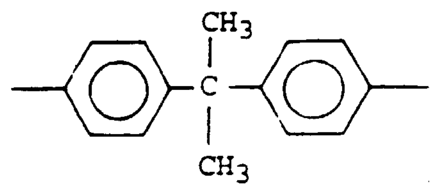

**4.** The composition of claim 1 wherein the aromatic resin is a polyester carbonate.

**5.** The composition of claim 1 wherein the aromatic resin selected is a polycarbonate.

**6.** The composition of claim 1 wherein the aromatic resin selected is a polyarylate.

**7.** The composition of claim 1 wherein the resin (a) selected is a polyester-carbonate resin containing recurring polycarbonate chain units of the formula:

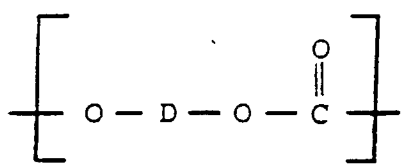

wherein D is a divalent aromatic radical of the dihydric phenol employed in the resin preparation; and repeating or recurring carboxylic chain units of the formula:-

-O-R-O-D-

wherein D has the meaning previously ascribed to it and R is a divalent moiety selected from those of the formulae:-

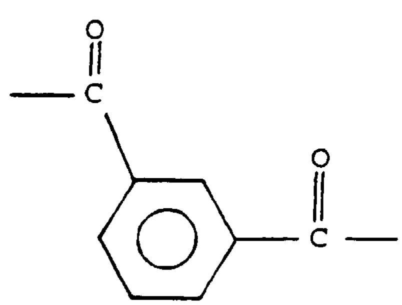

(VI)

or

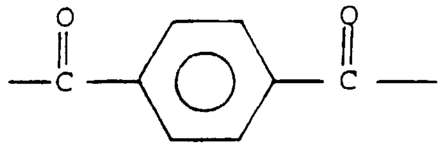

(VII)

said composition having an average of 40 to 80 weight percent of ester units of the formulae VI and VII together; and

said moieties (VI) and (VII) in the blend being in a weight ratio within the range of 100:0 to 0:100; optionally in combination with an aromatic polycarbonate homopolymer.

**8.** The composition of claim 7 wherein said ratio is with the range of from 25:75 too 75:25.

**9.** The composition of claim 7 wherein the aromatic resin is a polyester-carbonate copolymer resulting from the condensation of bisphenol A with a mixture of terephthaloyl dichloride with isophthaloyl dichloride; and phosgene.

**10.** The composition of claim 7 wherein the aromatic polyester-carbonate is a copolymer resulting from the condensation of bisphenol A with terephthaloyl dichloride and phosgene.

**11.** The composition of claim 7 which comprises a minor proportion of an aromatic polycarbonate homopolymer.

**12.** The composition of claim 1 wherein the resin (a) selected is a thermoplastic aromatic polyarylate resin having repeating chain units of the formula:-

-O-R-O-D-

wherein D is a divalent aromatic radical of the dihydric phenol employed in the resin preparation;
and R is a divalent moiety selected from those of the formulae:

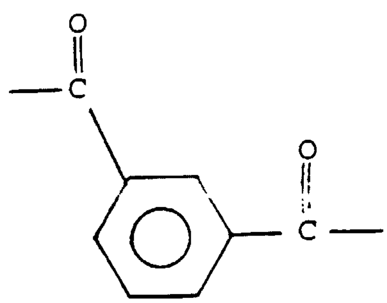

(VI)

or

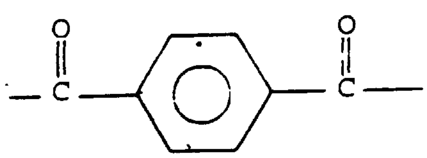

(VII)

said moieties (VI) and (VII) in the blend being in a weight ratio within the range of from about 50,50; optionally in combination with a polycarbonate homopolymer resin.

13. The composition of claim 12 wherein there is also present a minor proportion by weight of a polycarbonate homopolymer resin.

14. The composition of any preceding claim which further comprises an effective amount for fire retardation of a fire retardant.

15. The composition of claim 14 wherein the fire retardant is selected from the group consisting of sodium benzenephosphinate and sodium 2,4,5-trichlorobenzenesulfonate.

16. The composition of claim 15 wherein the additive is pre-mixed with the polyetherimide (b) before blending with the remaining ingredients (a) and (c).

17. The composition of claim 16 wherein the fire retardant proportion is within the range of from 50 to 500 PPM of the polyetherimide.

18. The composition of any preceding claim which further comprises a proportion of titanium dioxide.

19. The composition of claim 18 wherein the proportion of titanium dioxide is within the range of from 0.1 to 3 parts by weight.

20. An article thermoplastically molded from the composition of any preceding claim.

21. The article of claim 20 which is laminated to a film of poly vinylidene fluoride (PVF) and thermoformed.

**Patentansprüche**

1. Eine thermoplastisch formbare Formzusammensetzung, die umfaßt:
eine Mischung aus

(a) einem aromatischen thermoplastischen Harz, ausgewählt aus der Gruppe bestehend aus einem Polycarbonatharz, einem Polyestercarbonatharz und einem Polyarylatharz;

(b) einem Polyätherimidharz mit den wiederkehrenden Ketteneinheiten der Formel:

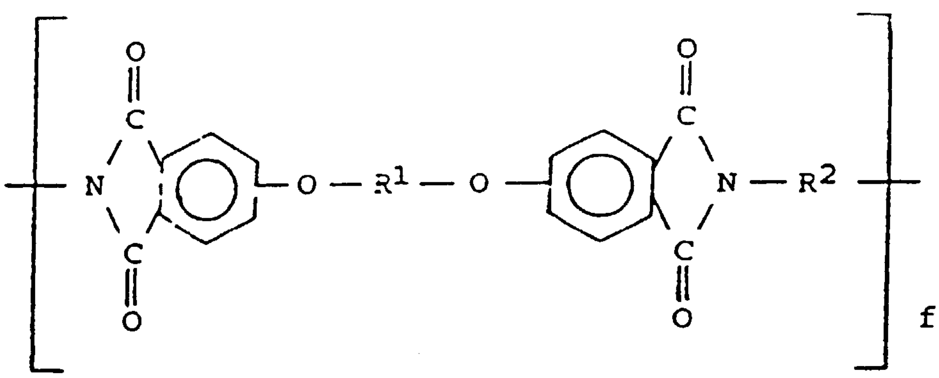

(I)

worin f eine ganze Zahl von 10 bis 500 ist; $R^2$ einen zweiwertigen aliphatischen Kohlenwasserstoffrest, der von 2 bis 12 Kohlenstoffatome enthält, einen zweiwertigen aromatischen Kohlenwasserstoffrest von 6 bis 30 Kohlenstoffatomen, einen halogenierten Kohlenwasserstoffrest, der von 6 bis 18 Kohlenstoffatomen enthält oder einen zweiwertigen cycloaliphatischen Kohlenwasserstoffrest, der von 3 bis 10 Kohlenstoffatome enthält, repräsentiert und $R^1$ ein zweiwertiger aromatischer organischer Rest mit von 6 bis 30 Kohlenstoffatomen ist; und

(c) einem Silikon-Polyätherimid-Copolymer, das wiederkehrende oder sich wiederholende Ketteneinheiten der oben angegebenen Formel (I) enthält, unterbrochen durch Polysiloxan-Einheiten der Formel:

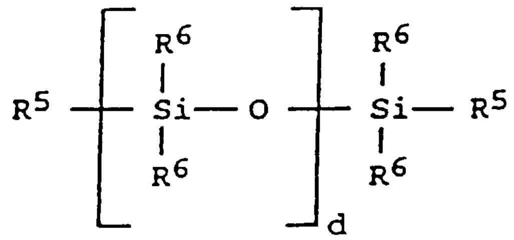

(II)

worin jedes $R^5$ einen zweiwertigen Kohlenwasserstoffrest mit 1 bis 14 Kohlenstoffatomen repräsentiert; jedes $R^6$ unabhängig ausgewählt ist aus einwertigen Kohlenwasserstoffresten mit 1 bis 14 Kohlenstoffatomen; und d eine ganze Zahl von 4 bis 40 ist und wobei die relativen Gewichtsanteile der Ingredienzien (a), (b) und (c) von 63 bis 89 Gewichtsteile von (a), von 0,4 bis 4,6 Gewichtsteilen von (c) und dem Ausgleich (b) betragen, bezogen auf die Gesamtmenge von 100 Gewichtsteilen von (a), (b) und (c).

**2.** Die Zusammensetzung nach Anspruch 1, worin $R^1$ ausgewählt ist aus der Gruppe bestehend aus aromatischen Kohlenwasserstoffresten; halogenierten aromatischen Kohlenwasserstoffresten und Resten, die durch die Formel

$$-R^3-(G)_g-R^3$$

eingeschlossen sind, worin $R^3$ einen zweiwertigen aromatischen Rest mit von 6-13 Kohlenstoffatomen, ausgewählt aus Kohlenwasserstoffresten und halogenierten Kohlenwasserstoffresten darstellt, g 0 oder 1 ist und G ein zweiwertiger Rest ist, ausgewählt aus jenen der Formel:

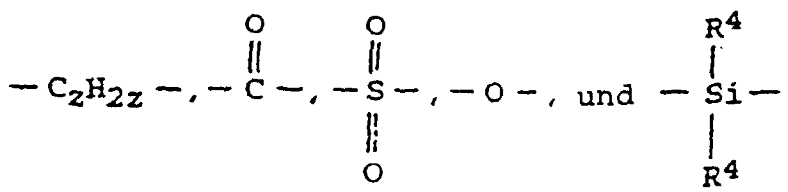

;

worin z eine ganze Zahl mit einem Wert von 1-5 ist und $R^4$ einen einwertigen Alkyl-, Aryl-, Alkaryl- oder Aralkylrest darstellt.

**3.** Die Zusammensetzung nach Anspruch 2, worin $R^1$ ein zweiwertiger Anteil der Formel

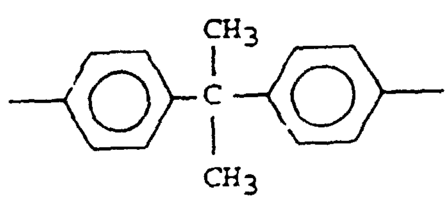

ist.

**4.** Die Zusammensetzung nach Anspruch 1, worin das aromatische Harz ein Polyestercarbonat ist.

**5.** Die Zusammensetzung nach Anspruch 1, worin das ausgewählte aromatische Harz ein Polycarbonat ist.

6. Die Zusammensetzung nach Anspruch 1, worin das ausgewählte aromatische Harz ein Polyarylat ist.

7. Die Zusammensetzung nach Anspruch 1, worin das ausgewählte Harz (a) ein Polyestercarbonatharz ist, enthaltend wiederkehrende Polycarbonatketten-Einheiten der Formel

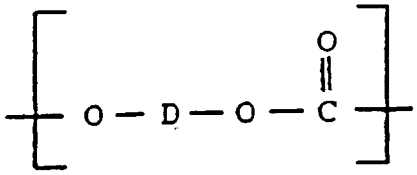

worin D ein zweiwertiger aromatischer Rest des bei der Harzherstellung angewendeten zweiwertigen Phenols ist, und sich wiederholende oder wiederkehrende Carbonsäure-Ketteneinheiten der Formel

-O-R-O-D-

worin D die ihm zuvor zugeschriebene Bedeutung besitzt und R ein zweiwertiger Anteil ist, der aus jenen der Formeln

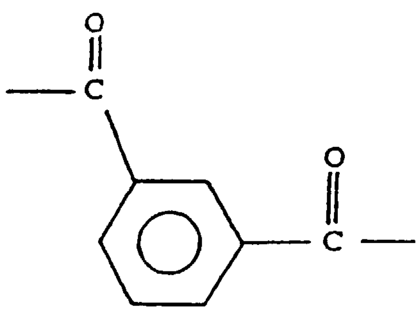

(VI)

oder

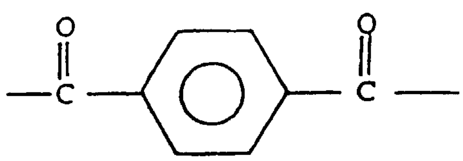

(VII)

ausgewählt ist, wobei besagte Zusammensetzung ein Mittel von 40 bis 80 Gewichtsprozent von Estereinheiten der Formeln VI und VII zusammen aufweist; und
besagte Anteile (VI) und (VII) in der Mischung sich in einem Gewichtsverhältnis im Bereich von 100:0 bis 0:100, wahlweise in Kombination mit einem aromatischen Polycarbonat-Homopolymer, befinden.

8. Die Zusammensetzung nach Anspruch 7, worin sich besagtes Verhältnis im Bereich von 25:75 bis 75:25 befindet.

9. Die Zusammensetzung nach Anspruch 7, worin das aromatische Harz ein Polyestercarbonat-Copolymer ist, das aus der Kondensation von Bisphenol A mit einer Mischung aus Terephthaloyldichlorid mit Isophtaloyldichlorid und Phosgen resultiert.

**10.** Die Zusammensetzung nach Anspruch 7, worin das aromatische Polyestercarbonat ein Copolymer ist, das aus der Kondensation von Bisphenol A mit Terephthaloyldichlorid und Phosgen resultiert.

**11.** Die Zusammensetzung nach Anspruch 7, die einen geringen Anteil von einem aromatischen Polycarbonathomopolymer umfaßt.

**12.** Die Zusammensetzung nach Anspruch 1, worin das ausgewählte Harz (a) ein thermoplastisches aromatisches Polyarylatharz mit sich wiederholenden Ketteneinheiten der Formel:

-O-R-O-D-

ist, worin D ein zweiwertiger aromatischer Rest des bei der Harzherstellung angewendeten zweiwertigen Phenols ist;
und R ein zweiwertiger Anteil ist, der aus jenen der Formeln

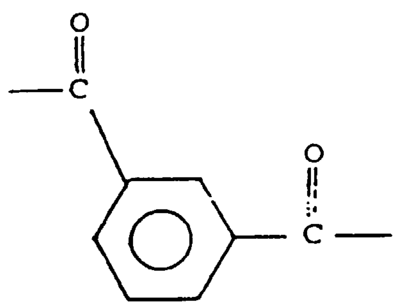

(VI)

oder

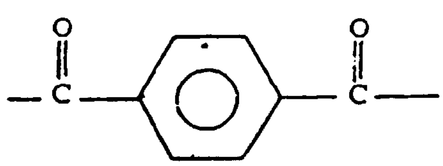

(VII)

ist, wobei sich besagte Anteile (VI) und (VII) in der Mischung in einem Gewichtsverhältnis innerhalb des Bereichs von etwa 50:50 befinden, wahlweise in Kombination mit einem Polycarbonat-Homopolymerharz.

**13.** Die Zusammensetzung nach Anspruch 12, worin auch ein geringer Gewichtsanteil eines Polycarbonat-Homopolymerharzes anwesend ist.

**14.** Die Zusammensetzung nach irgendeinem vorhergehenden Anspruch, die weiter eine wirksame Menge eines flammhemmenden Mittels zur Verzögerung der Entflammbarkeit umfaßt.

**15.** Die Zusammensetzung nach Anspruch 14, worin das flammhemmende Mittel aus der Gruppe bestehend aus Natriumbenzolphosphinat und Natrium-2,4,5-trichlorbenzolsulfonat ausgewählt wird.

**16.** Die Zusammensetzung nach Anspruch 15, worin das Additiv mit dem Polyätherimid(b) vorgemischt wird, bevor es mit den verbleibenden Ingredienzien (a) und (c) vermischt wird.

**17.** Die Zusammensetzung nach Anspruch 16, worin sich der Anteil des flammhemmenden Mittels im Bereich von 50 bis 500 ppm des Polyätherimids befindet.

**18.** Die Zusammensetzung nach irgendeinem vorhergehenden Anspruch, die weiter einen Anteil an Titandioxid umfaßt.

**19.** Die Zusammensetzung nach Anspruch 18, worin der Anteil an Titandioxid sich im Bereich von 0,1 bis 3 Gewichtsteilen befindet.

**20.** Ein Gegenstand, thermoplastisch ausgeformt aus der Zusammensetzung nach irgendeinem vorhergehenden Anspruch.

**21.** Ein Gegenstand nach Anspruch 20, der zu einem Film von Polyvinylidenfluorid (PVF) laminiert und thermogeformt ist.

**Revendications**

**1.** Composition thermoformable pour moulage, qui comprend un mélange de :

(a) une résine thermoplastique aromatique, choisie parmi les résines de polycarbonate, les résines de polyester-carbonate et les résines de polyarylate;
(b) une résine de polyétherimide, présentant des motifs qui se répètent, de formule :

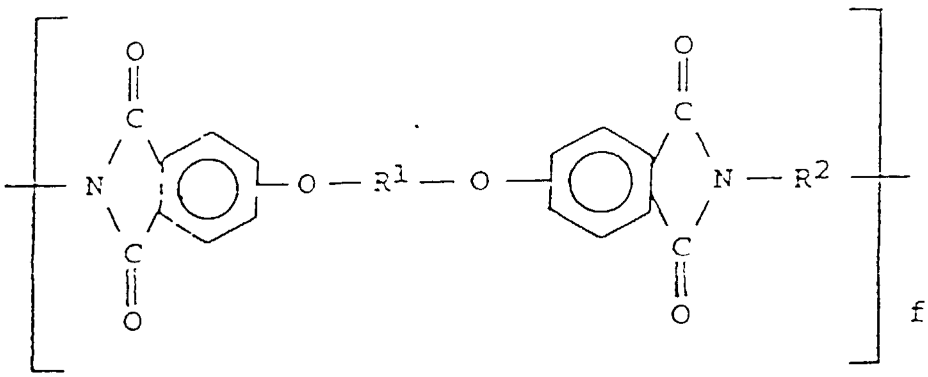

(I)

dans laquelle f représente un nombre entier ayant une valeur de 10 à 500, $R^2$ représente un groupe hydrocarboné aliphatique divalent, ayant 2 à 12 atomes de carbone, un groupe hydrocarboné aromatique divalent, ayant 6 à 30 atomes de carbone, un groupe hydrocarboné halogéné ayant 6 à 18 atomes de carbone, ou un groupe hydrocarboné cycloaliphatique divalent, ayant 3 à 10 atomes de carbone, et $R^1$ représente un groupe organique aromatique divalent, ayant 6 à 30 atomes de carbone; et
(c) un copolymère silicone-polyétherimide, contenant des motifs de formule (I) indiquée précédemment, se répétant ou revenant dans la chaîne, séparés par des motifs polysiloxane de formule :

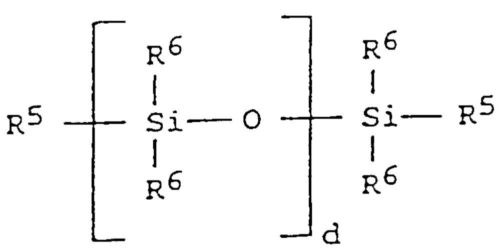

(II)

dans laquelle chaque $R^5$ représente un groupe hydrocarboné divalent, ayant 1 à 14 atomes de carbone, chaque $R^6$ représente indépendamment un groupe hydrocarboné monovalent, ayant 1 à 14 atomes de carbone, et d représente un nombre entier ayant une valeur de 4 à 40;

les proportions relatives en poids des ingrédients (a), (b) et (c) étant de 63 à 89 parties en poids de (a), 0,4 à 4,6 parties en poids de (c) et le reste de (b), pour un total de 100 parties en poids de (a), (b) et (c).

**2.** Composition selon la revendication 1, pour laquelle $R^1$ est choisi parmi les groupes hydrocarbonés aromatiques, les groupes hydrocarbonés aromatiques halogénés, et les groupes représentés par la formule :

$$-R^3-(G)_g-R^3-$$

dans laquelle $R^3$ représente un groupe aromatique divalent ayant 6 à 13 atomes de carbone, choisi parmi les groupes hydrocarbonés et les groupes hydrocarbonés halogénés, g est égal à 0 ou 1 et G représente un groupe divalent, choisi parmi les groupes de formules :

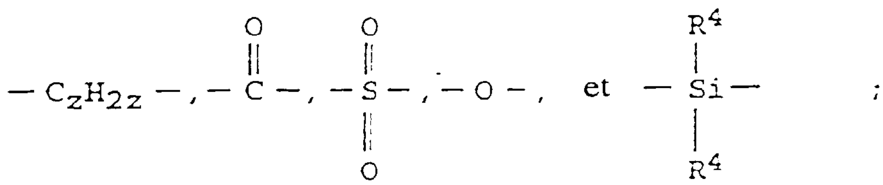

dans lesquelles z représente un nombre entier ayant une valeur de 1 à 5, et $R^4$ représente un groupe monovalent alkyle, aryle, alkylaryle ou aralkyle.

**3.** Composition selon la revendication 2, pour laquelle $R^1$ représente un fragment divalent de formule :

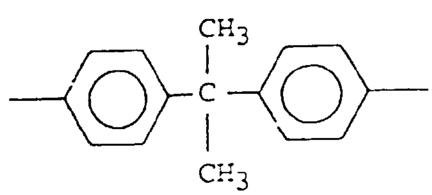

**4.** Composition selon la revendication 1, dans laquelle la résine aromatique est un polyester-carbonate.

**5.** Composition selon la revendication 1, dans laquelle la résine aromatique choisie est un polycarbonate.

**6.** Composition selon la revendication 1, dans laquelle la résine aromatique choisie est un polyarylate.

**7.** Composition selon la revendication 1, dans laquelle la résine (a) choisie est une résine de polyester-carbonate, contenant des motifs de polycarbonate revenant dans la chaîne, de formule :

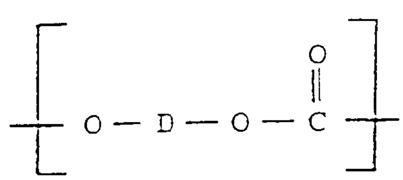

dans laquelle D représente un groupe aromatique divalent, provenant du phénol dihydroxylé utilisé pour la préparation de la résine; et des motifs carboxyliques se répétant ou revenant dans la chaîne, de formule :

$$-O-R-O-D-$$

dans laquelle D a la signification indiquée précédemment et R représente un fragment divalent, choisi parmi les fragments de formules :

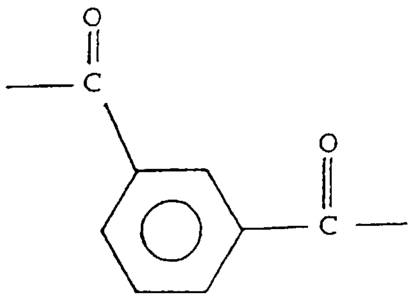

(VI)

et

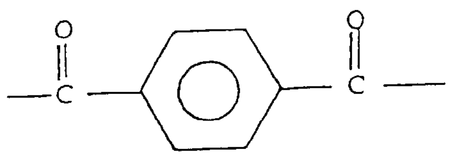

(VII)

ladite composition contenant en moyenne au total 40 à 80% en poids de motifs ester de formules (VI) et (VII); et lesdits fragments (VI) et (VII) étant présents dans le mélange suivant un rapport en poids compris dans l'intervalle allant de 100:0 à 0:100;

éventuellement en combinaison avec un homopolymère polycarbonate aromatique.

**8.** Composition selon la revendication 7, dans laquelle ledit rapport est compris dans l'intervalle allant de 25:75 à 75: 25.

**9.** Composition selon la revendication 7, dans laquelle la résine aromatique est un copolymère polyester-carbonate résultant de la condensation du bisphénol A avec un mélange de dichlorure de téréphtaloyle et de dichlorure d'isophtaloyle et du phosgène.

**10.** Composition selon la revendication 7, dans laquelle le polyester-carbonate aromatique est un copolymère résultant de la condensation du bisphénol A avec du dichlorure de téréphtaloyle et du phosgène.

**11.** Composition selon la revendication 7, qui renferme une proportion mineure d'un homopolymère polycarbonate aromatique.

**12.** Composition selon la revendication 1, dans laquelle la résine (a) choisie est une résine thermoplastique de polyarylate aromatique, présentant des motifs qui se répètent, de formule :

-O-R-O-D-

dans laquelle D représente un groupe aromatique divalent, provenant du phénol dihydroxylé employé pour la préparation de la résine, et R représente un fragment divalent, choisi parmi les fragments de formules :

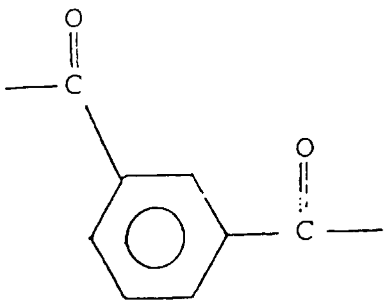

(VI)

et

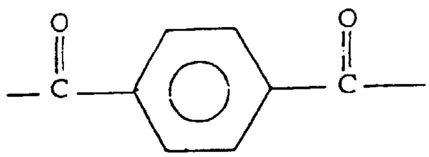

(VII)

lesdits fragments (VI) et (VII) étant présents dans le mélange suivant un rapport en poids d'environ 50:50; éventuellement en combinaison avec une résine d'homopolymère polycarbonate.

**13.** Composition selon la revendication 12, dans laquelle est également présente une proportion en poids mineure d'une résine d'homopolymère polycarbonate.

**14.** Composition selon l'une quelconque des revendications précédentes, qui contient en outre une quantité d'un agent retardant l'inflammation, permettant de retarder l'inflammation.

**15.** Composition selon la revendication 14, pour laquelle l'agent retardant l'inflammation est choisi parmi le benzènephosphinate de sodium et le 2,4,5-trichlorobenzènesulfonate de sodium.

**16.** Composition selon la revendication 15, pour laquelle on mélange au préalable l'additif avec le polyétherimide (b) avant de réaliser le mélange avec les ingrédients restants (a) et (c).

**17.** Composition selon la revendication 16, dans laquelle la proportion d'agent retardant l'inflammation est comprise dans l'intervalle allant de 50 à 500 ppm par rapport au polyétherimide.

**18.** Composition selon l'une quelconque des revendications précédentes, qui contient en outre une certaine proportion de dioxyde de titane.

**19.** Composition selon la revendication 18, dans laquelle la proportion de dioxyde de titane est comprise dans l'intervalle allant de 0,1 à 3 parties en poids.

**20.** Article formé par moulage, par un procédé thermoplastique, à partir de la composition selon l'une quelconque des revendications précédentes.

**21.** Article selon la revendication 20, qui est appliqué à un film de poly(fluorure de vinylidène) (PVF) de façon à former un stratifié, et thermoformé.

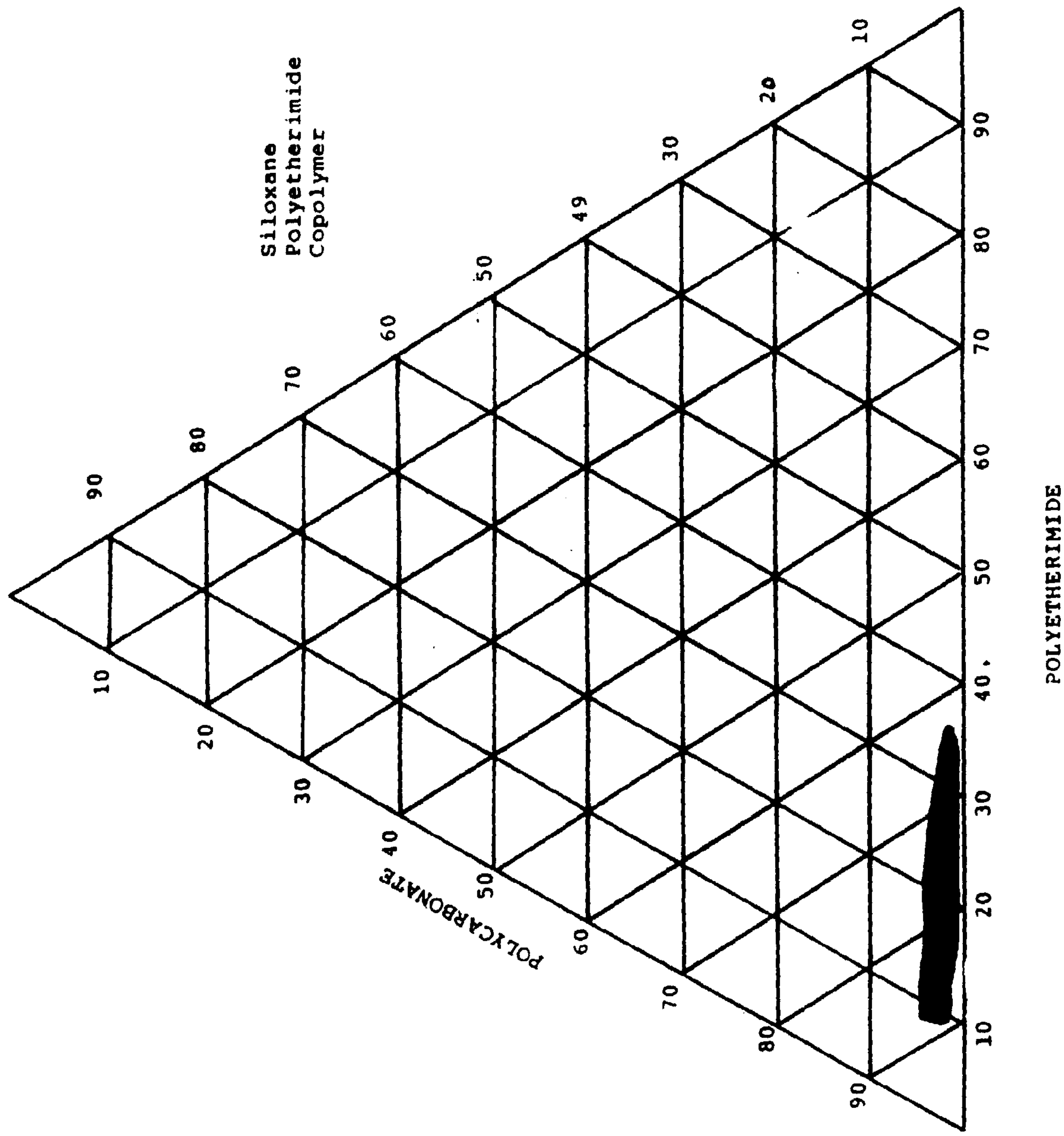
Siloxane
Polyetherimide
Copolymer
POLYCARBONATE
POLYETHERIMIDE
10
20
30
49
50
60
70
80
90

Figure 1

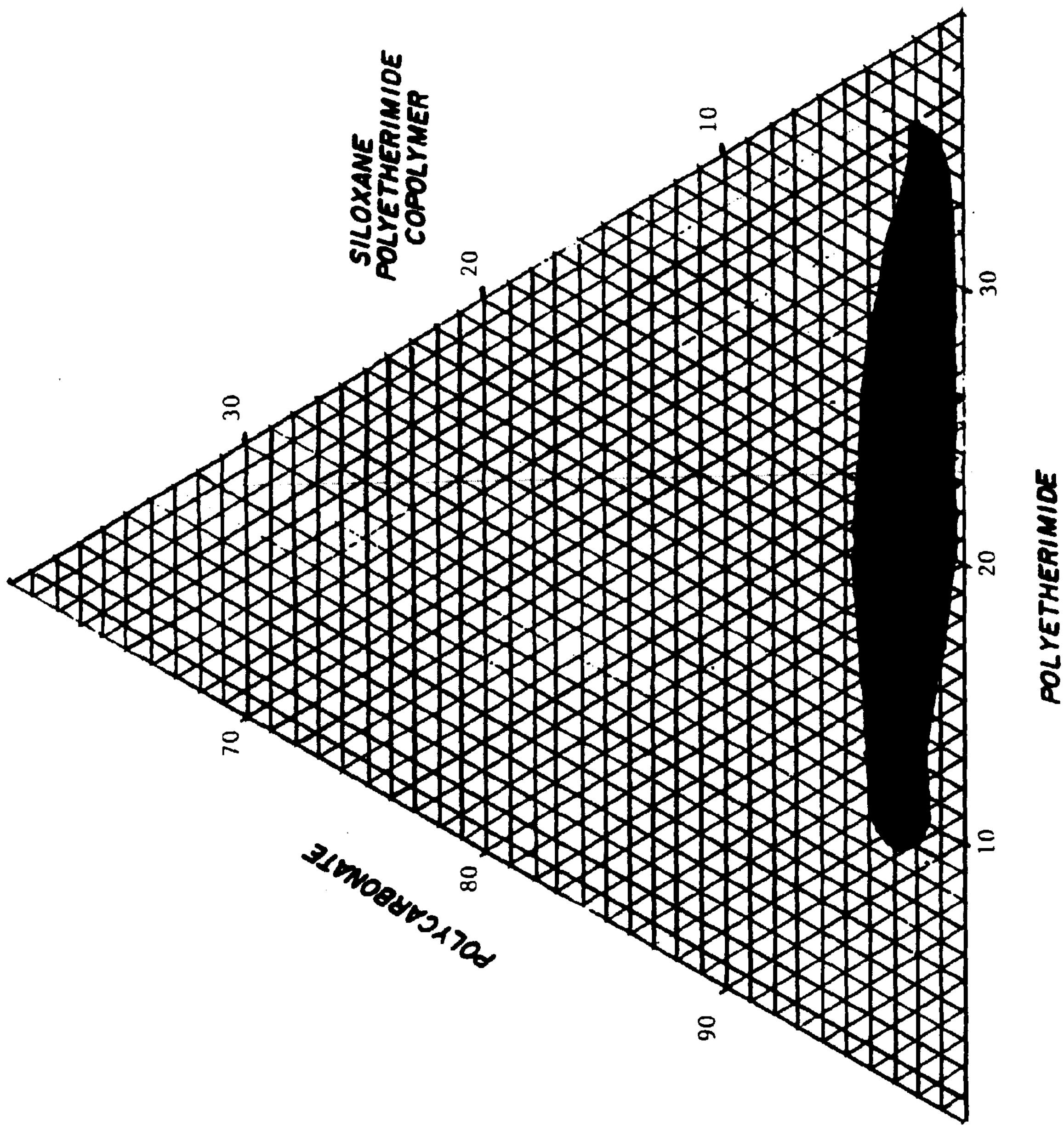
SILOXANE POLYETHERIMIDE COPOLYMER
POLYCARBONATE
POLYETHERIMIDE
10
20
30
70
80
90
10
20
30

Figure 2